# EUROPÄISCHE PATENTANMELDUNG

(11) **EP 3 366 398 A1**
(43) Veröffentlichungstag der Anmeldung: **29.08.2018**
(21) Anmeldenummer: 17158297.6
(22) Anmeldetag: 28.02.2017
(51) Int. Cl.: B23B 31/28

(54) **SPANNEINHEIT FÜR EIN SPANNFUTTER EINER WERKZEUGMASCHINENSPINDEL**

(71) Anmelder: Step-Tec AG, 4542 Luterbach (CH)
(72) Erfinder: Reinhard, Edwin, 3362 Niederönz (CH); Steffen, Dominique, 4513 Langendorf (CH)
(74) Vertreter: Fenner, Seraina

(57) **Zusammenfassung**

Die Spanneinheit (10) für ein Spannfutter einer Werkzeugmaschinenspindel enthält eine Gewindewelle (12) zur Verstellung der Spannbacken des Spannfutters. Die Gewindewelle (12) ist mittels einer mit einem Rotor (15) eines motorischen Stellantriebs (15, 18) verbundenen Gewindemutter (13) in der Spanneinheit (10) axial verstellbar. Eine elektrisch betätigbare, lösbare Kupplung (19, 20, 23) hat ein erstes Kupplungselement (19), das drehfest und axial verschiebbar mit der Gewindewelle (12) verbunden ist und ein zweites, mit dem ersten Kupplungselement (19) zusammenwirkendes Kupplungselement (20), das drehfest mit dem Rotor (15) verbunden ist. Bei erregter Kupplung (19, 20, 23) sind die Gewindewelle (12) und die Gewindemutter (13) drehfest miteinander verbunden und verhindern eine axiale Verstellung der Gewindewelle (12).

## Beschreibung

Die Erfindung betrifft eine Spanneinheit für ein Spannfutter einer Werkzeugmaschinenspindel, enthaltend eine Gewindewelle zur Verstellung der Spannbacken des Spannfutters, die mittels einer mit einem Rotor eines motorischen Stellantriebs verbundenen Gewindemutter in der Spanneinheit axial verstellbar ist.

Solche Spanneinheiten dienen auf Werkzeugmaschinen zum Betätigen von Spannfuttern, in denen ein Werkstück oder ein Werkzeug eingespannt wird. Es sind Spanneinheiten bekannt, bei denen die Kraft zum Spannen und/oder Lösen durch in Spindellängsrichtung wirkende pneumatische oder hydraulische Antriebe aufgebracht wird. Falls solche Antriebe an der Werkzeugmaschine nicht vorhanden oder nicht erwünscht sind, bedient man sich elektrischer Antriebe zum Ausführen der Spann- und Lösebewegungen.

Es sind Spanneinheiten bekannt, beispielsweise aus dem Dokument DE102006017645A1, bei denen die Spannkraft mit Hilfe von Federn aufrecht erhalten wird. Bei solchen Spanneinheiten wirkt die Lösekraft entgegen der Federkraft und sie sind deshalb beispielsweise für die Betätigung von Spannfuttern ungeeignet, mit denen ein Werkstück oder Werkzeug wahlweise aussen oder innen gespannt werden soll.

Das Dokument EP2081717A1 beschreibt unter dem Titel Elektrospanner eine Spanneinheit, bei der die Verstellbewegungen zum Spannen und Lösen über einen Gewindespindelantrieb erfolgt, wobei dieser mit einem Gleitkegelgetriebe wirkverbunden ist, das seinerseits über einen externen Stellmotor antreibbar ist. Die eingestellte Spannkraft wird dabei im Betrieb, das heisst bei rotierender Spindel, nur durch die Selbsthemmung des Gewindespindelantriebs und des damit verbundenen Gleitkegelgetriebes aufrecht erhalten. Dieses Konzept erlaubt keine hohen Spindeldrehzahlen, beispielsweise im Bereich von 10'000 min-1 und keine hohen Drehbeschleunigungen.

Ausgehend von diesem Stand der Technik liegt der Erfindung die Aufgabe zugrunde, eine Spanneinheit vorzuschlagen, die hohe Kräfte in zwei entgegengesetzten axialen Richtungen aufzubringen und auch bei hohen Spindeldrehzahlen zu halten vermag.

Diese Aufgabe wird erfindungsgemäss durch die im kennzeichnenden Teil des Patentanspruchs 1 angegebenen Merkmale gelöst.

Diese erfindungsgemässe Lösung hat den Vorteil, dass durch die Kupplung gewährleistet wird, dass im Betrieb und insbesondere beim hoch- und herunterfahren der Spindeldrehzahl die Gewindewelle zusammen mit der Gewindemutter rotiert und damit eine unerwünschte Verstellung der Spannkraft verhindert wird.

Besondere Ausführungsarten der Erfindung sind in den abhängigen Patentansprüchen definiert.

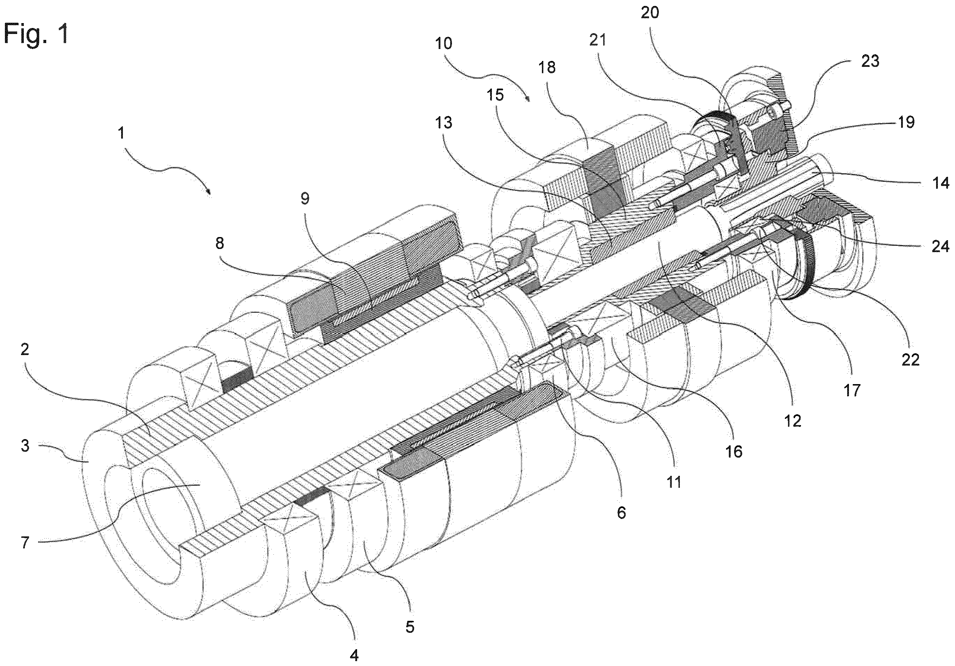

Ein Ausführungsbeispiel der Erfindung wird nachstehend unter Bezugnahme auf die angefügte Zeichnung erläutert. Dabei zeigt die einzige
- Figur 1: eine schematische, aufgeschnittene perspektivische Ansicht einer Motorspindel mit einer erfindungsgemässen Spanneinheit.

Die Motorspindel 1 weist eine hohle Spindelwelle 2 auf, in der ein Spannkolben 7 axial hin- und her bewegbar aufgenommen ist. Ein nicht dargestelltes Spannfutter wird an der Stirnseite 3 der Spindelwelle 2 befestigt und gesichert. Durch Axialbewegungen des Spannkolbens 7 wird das Spannfutter gespannt beziehungsweise gelöst. Diese Axialbewegung wird durch die nachstehend beschriebene Spanneinheit 10 ausgeführt. Aussen auf der Spindelwelle 2 ist ein drehfest mit dieser verbundener Spindelmotor-Rotor 9 angeordnet, der seinerseits von einem Spindelmotor-Stator 8 umgeben ist. Zur drehbaren Lagerung der Spindelwelle 2 dienen Lager 4, 5 und 6.

Die Spanneinheit 10 ist mit Schrauben 11 mit der Motorspindel 1 verbunden. An der der Stirnseite 3 gegenüberliegenden Seite des Spannkolbens 7 ist eine Gewindewelle angeordnet, die im Beispiel als Rollengewinde-Welle 12 ausgebildet und von einer mit ihr zusammenwirkenden Rollengewinde-Mutter 13 umgeben ist. An die Rollengewinde-Welle 12 schliesst eine Keilwelle 14 oder ein Wellenbereich mit entsprechender Funktion an. Die Rollengewinde-Mutter 13 ist mit einem Stellantrieb-Rotor 15 verbunden, der von einem Lager 16 getragen wird und seinerseits von einem Stellantrieb-Stator 18 umgeben ist. Durch Drehungen des Stellantrieb-Rotors 15 bei stillstehender Rollengewinde-Welle 12 kann somit der Spannkolben 7 in axialer Richtung verstellt werden und damit das Spannfutter öffnen und schliessen. Je nachdem ob ein zu spannendes Werkstück beziehungsweise Werkzeug mit dem Spannfutter von aussen oder von innen gespannt werden soll, ist die vom Spannkolben ausgeübte Spannkraft eine Zugkraft oder eine Druckkraft. Der Betrag der Spannkraft wird durch das Drehmoment des Stellantriebs 15, 18 bestimmt und beispielsweise über dessen Stromaufnahme gemessen.

Die Keilwelle 14 ist in einem Kupplungsrotor 19 drehfest, aber längsverschiebbar aufgenommen. Eine Kupplungswicklung 23 ist an einem umgebenden Gehäuse befestigt. Gegenüber dem Kupplungsrotor 19 ist eine mit einer Verbindungshülse 21 verbundene Ankerscheibe 20 angeordnet und der Kupplungsrotor 19 ist durch ein Lager 24 gegenüber der Verbindungshülse 21 abgestützt und mit Schrauben 22 am Stellantrieb-Rotor 15 befestigt. Aussen wird die Verbindungshülse 21 durch ein Lager 17 getragen.

Zum Spannen eines Werkstücks oder Werkzeugs wird bei stillstehender Spindel die Kupplungswicklung 23 stromlos gehalten, so dass zwischen dem Kupplungsrotor 19 und der Ankerscheibe 20 kein Kraftschluss besteht. Wenn nun der Stellantrieb-Rotor 15 und mit ihm die Rollengewinde-Mutter 13 gedreht wird, verschiebt sich die nicht rotierende Rollengewinde-Welle 12 und mit ihr der Spannkolben 7 in axialer Richtung. Die Spannkraft kann dabei über den Stromfluss im Stellantrieb gesteuert werden. Der Spindelmotor-Rotor 9 muss dazu mit dem Spindelmotor-Stator 8 gehalten werden. Nach dem Spannvorgang wird zunächst die Kupplungswicklung 23 bestromt, wodurch die Ankerscheibe 20 gegen den Kupplungsrotor 19 gezogen und mit diesem kraftschlüssig verbunden wird. Beim anschliessenden Hochfahren des Spindelmotors 8, 9 wird über die Kupplung 19, 20, 23 der Stellantrieb-Rotor 15 mitgenommen und eine Relativbewegung zwischen der Rollengewinde-Welle 12 und der Rollengewinde-Mutter 13 zuverlässig verhindert. Selbstverständlich darf während der Rotation der Spindel der Stellantrieb 15, 18 nicht betätigt werden und der Rollengewindetrieb 12, 13 muss über die bestromte elektromagnetische Kupplung 19, 20, 23 Kraftschluss haben. Ohne die Kupplung 19, 20, 23 würde die Gefahr bestehen, dass die durch das schnelle Hoch- bzw. Herunterfahren der Spindeldrehzahl, wie auch durch Lastwechsel im Betrieb des Spindelantriebs hervorgerufenen rotatorischen Beschleunigungskräfte zu einer Überwindung der Selbsthemmung des Rollengewindetriebs 12,13 und damit zu einer ungewollten Änderung der Spannkraft führen.

Die verschiedenen Kraftflüsse innerhalb des gesamten rotierenden Spindel-/ und Spannsystem wirken nicht auf das Lagersystem oder andere umliegende Komponenten.

### Bezugszeichenliste

- 1: Motorspindel
- 2: Spindelwelle
- 3: Stirnseite
- 4: Lager
- 5: Lager
- 6: Lager
- 7: Spannkolben
- 8: Spindelmotor-Stator
- 9: Spindelmotor-Rotor
- 10: Spanneinheit
- 11: Schrauben
- 12: Rollengewinde-Welle
- 13: Rollengewinde-Mutter
- 14: Keilwelle
- 15: Stellantrieb-Rotor
- 16: Lager
- 17: Lager
- 18: Stellantrieb-Stator
- 19: Kupplungsrotor
- 20: Ankerscheibe
- 21: Verbindungshülse
- 22: Schrauben
- 23: Kupplungswicklung
- 24: Lager

## Patentansprüche

1. Spanneinheit (10) für ein Spannfutter einer Werkzeugmaschinenspindel, enthaltend eine Gewindewelle (12) zur Verstellung der Spannbacken des Spannfutters, die mittels einer mit einem Rotor (15) eines motorischen Stellantriebs (15, 18) verbundenen Gewindemutter (13) in der Spanneinheit (10) axial verstellbar ist, **gekennzeichnet durch** eine elektrisch betätigbare, lösbare Kupplung (19, 20, 23) mit einem ersten Kupplungselement (19), das drehfest und axial verschiebbar mit der Gewindewelle (12) verbunden ist und einem mit dem ersten Kupplungselement (19) zusammenwirkenden zweiten Kupplungselement (20), das drehfest mit dem Rotor (15) verbunden ist.

2. Spanneinheit (10) nach Anspruch 1, **dadurch gekennzeichnet, dass** die Gewindewelle als Rollengewinde-Welle (12) und die Gewindemutter als Rollengewinde-Mutter (13) ausgebildet ist.

3. Spanneinheit (10) nach einem der vorangehenden Ansprüche, **dadurch gekennzeichnet, dass** die Kupplung (19, 20, 23) als Reibkupplung ausgebildet ist.

4. Spanneinheit (10) nach einem der vorangehenden Ansprüche, **dadurch gekennzeichnet, dass** die Kupplung (19, 20, 23) so ausgebildet ist, dass das erste und das zweite Kupplungselement (19, 20) in stromlosem Zustand gegeneinander verdrehbar sind.
